# EUROPEAN PATENT APPLICATION

(11) **EP 4 783 418 A1**
(43) Date of publication of application: **29.07.2026**
(21) Application number: 25154013.4
(22) Date of filing: 27.01.2025
(51) Int. Cl.: H02K 1/24, H02K 15/0273, H02K 1/04, H02K 15/027

(54) **ROTOR FOR ELECTRIC MACHINE, ELECTRIC MACHINE COMPRISING THE ROTOR, AND METHOD FOR MANUFACTURING THE ELECTRIC MACHINE**

(71) Applicant: ABB SCHWEIZ AG, 5400 Baden (CH)
(72) Inventor: Ikäheimo, Jouni, 65320 Vaasa (FI); Känsäkangas, Tero, 65320 Vaasa (FI)
(74) Representative: Kolster Oy Ab

(57) **Abstract**

A rotor for an electric machine comprising a rotor core having a plurality of rotor sheets (RS1), each of the plurality of rotor sheets (RS1) comprising a plurality of flux guide sections, each of the plurality of flux guide sections comprising a plurality of flux paths (P1, P2, P3, P4) and a plurality of flux barriers (B1, B2, B3, B4). In a first flux guide section (FG1) one of the plurality of flux barriers has a bridge (BR1, BR2) interrupting the flux barrier and another of the plurality of flux barriers does not have a bridge (BR1, BR2). In a second flux guide section (FG2) said one of the plurality of flux barriers does not have a bridge (BR1, BR2) interrupting the flux barrier and said another of the plurality of flux barriers has a bridge (BR1, BR2).

## Description

### FIELD OF THE INVENTION

The present invention relates to a rotor for an electric machine. The present invention also relates to an electric machine comprising said rotor, and to a method for manufacturing an electric machine.

### BACKGROUND OF THE INVENTION

In an electric machine rotor provided with a plural number of magnetic poles, arranged substantially at equal intervals along the circumference of the rotor, each magnetic pole has a direct pole axis, or a direct axis. Two adjacent direct pole axes form an angle that is bisected by a quadrature axis. The reactance corresponding to the direct pole axis is called a direct-axis reactance and the reactance corresponding to the quadrature axis is called a quadrature-axis reactance. A reluctance torque is proportional to difference of inverse values of the quadrature-axis reactance and the direct-axis reactance, which difference can be written as 1/X_{q} - 1/X_{d}. Therefore, a reluctance torque can be increased by increasing the direct-axis reactance or by reducing the quadrature-axis reactance.

A known rotor of a reluctance machine comprises a rotor core having a plurality of rotor sheets stacked in an axial direction. Each of the plurality of rotor sheets comprises a plurality of flux guide sections located along circumferential direction of the rotor sheet, each of the plurality of flux guide sections comprising a plurality of flux paths made of a material of high permeance and a plurality of flux barriers made of a material of low permeance. The flux paths and flux barriers are located alternately along radial direction of the flux guide section. For mechanical reasons there are bridges made of a material of high permeance connecting some adjacent flux paths.

The bridges should be as narrow as possible in order to avoid undesirable leak flux from one flux path to another. The leak flux decreases efficiency and maximum torque and increases no-load current thereby deteriorating electrical properties of the electric machine. Therefore, the narrower the bridges are the better electrical properties of the electric machine.

Conventionally a rotor of a reluctance machine has been manufactured by punching flux barriers and other required openings into ferromagnetic sheets and stacking these sheets to form the rotor core. A plurality of rotor sheets manufactured by punching are stacked between end plates, the plurality of rotor sheets being attached to the end plates by bolts extending through the rotor sheets.

A problem associated with punching is that narrow bridges cannot be formed with it.

A known rotor for a synchronous reluctance motor is disclosed in EP2744076B1. Said publication discloses a rotor structure with reduced quadrature-axis reactance.

### BRIEF DESCRIPTION OF THE INVENTION

An object of the present invention is to improve electrical properties of an electric machine whose rotor sheets comprise bridges while being obtainable by punching. The objects of the invention are achieved by a rotor which is characterized by what is stated in the independent claim 1. The preferred embodiments of the invention are disclosed in the dependent claims.

The invention is based on the idea of providing a rotor for an electric machine such that the quadrature-axis flux is forced to flow in the axial direction of the rotor more than in known rotors, thereby reducing the quadrature-axis reactance.

A rotor according to the invention has a plurality of rotor sheets each of which comprises two types of flux guide sections each comprising a plurality of flux paths and a plurality of flux barriers. In a first flux guide section, one of the plurality of flux barriers has a bridge interrupting the flux barrier and another of the plurality of flux barriers does not have a bridge interrupting the flux barrier, and in a second flux guide section, said one of the plurality of flux barriers does not have a bridge interrupting the flux barrier and said another of the plurality of flux barriers has a bridge interrupting the flux barrier.

An advantage of the invention is that electrical properties of an electric machine having rotor sheets comprising bridges crossing flux barriers can be further improved without need to reduce width of the bridges in individual rotor sheets. The invention enables increasing power factor of a synchronous reluctance motor.

### BRIEF DESCRIPTION OF THE DRAWINGS

In the following the invention will be described in greater detail by means of preferred embodiments with reference to the attached drawings, in which
Figure 1 shows a rotor sheet of a rotor according to an embodiment of the invention; and
Figure 2 shows a rotor comprising a plurality of rotor sheets shown in Figure 1.

### DETAILED DESCRIPTION OF THE INVENTION

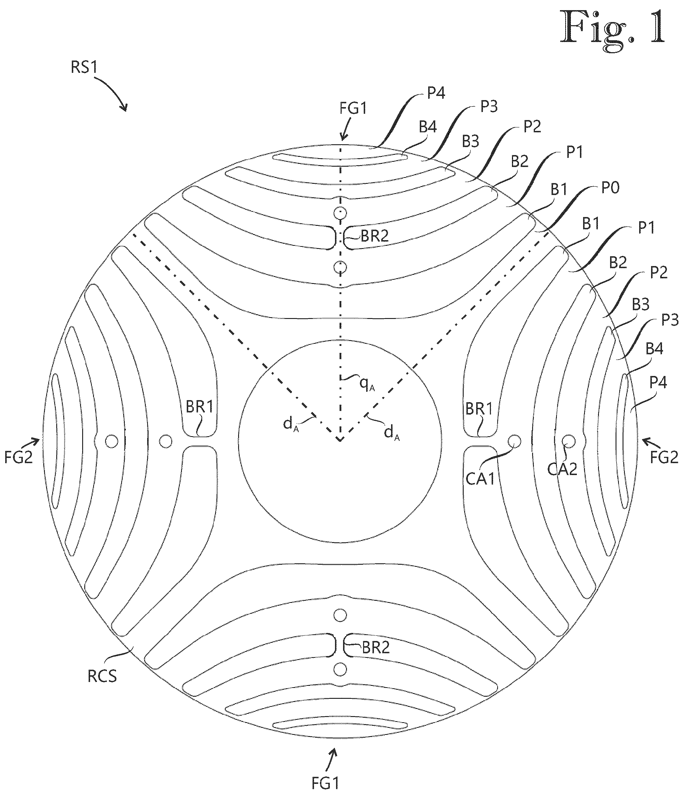

Figure 1 shows a rotor sheet RS1 of a rotor core for a four-pole rotor. The rotor sheet RS1 is adapted for a synchronous reluctance machine.

The rotor sheet RS1 comprises four flux guide sections located along circumferential direction of the rotor sheet. The four flux guide sections comprise two first flux guide sections FG1 and two second flux guide sections FG2. The first flux guide sections FG1 and second flux guide sections FG2 alternate in the circumferential direction of the rotor sheet such that after a first flux guide section FG1 there is a second flux guide section FG2, and after a second flux guide section FG2 there is a first flux guide section FG1.

Each of the flux guide sections comprises four flux paths P1, P2, P3 and P4 made of a material of high permeance and four flux barriers B1, B2, B3 and B4 made of a material of low permeance. Flux paths and flux barriers are located alternately along radial direction of corresponding flux guide section.

The material of low permeance is selected on the basis of the type of the electric machine. In a reluctance motor, the flux barriers may be filled with solid or powdery substances that are weakly conductive both as regards the magnetic flux and electricity. Useful substances include, depending on the embodiment, resins, plastics and carbon fibres. Naturally, in some embodiments the material of low permeance is air.

Each of the flux paths P1- P4 is arranged to conduct magnetic flux from a first extremity of the flux path to a second extremity thereof, both the first extremity and the second extremity ending at the rotor surface and being spaced apart from one another at the rotor surface in the direction of its circumference.

The flux paths P1 - P3 are arc-shaped paths. Flux paths P1 - P3 are shaped in such a way that the circumferential extremities, i.e. those referred above to as the first and the second extremities, are at a greater radial distance from the mid-axis of the rotor than an outer surface of a centre portion of the flux path in question. In other words, the flux paths P1 - P3 are inwards curved.

Each flux barrier B1 - B4 is arranged to increase the ratio of direct-axis reactance to quadrature-axis reactance. In other words, each flux barrier B1 - B4 is arranged to provide a high magnetic resistance between adjacent elements made of a material of high permeance.

The rotor sheet RS1 further comprises a centre section RCS. The centre section RCS is substantially X-shaped, with each tip of the X extending to the surface of the rotor. The direct pole axis d_{A} of each magnetic pole passes through the portion of the centre section RCS that extends to the rotor surface. In the middle of the centre section RCS there is a hole arranged to receive a rotor shaft.

The centre section RCS is made of material of high permeance. Therefore, the centre section RCS forms a centre flux path P0 for each flux guide section. Each centre flux path P0 is located adjacent to a respective flux barrier B1 and is arranged to conduct magnetic flux from a first extremity of the centre flux path to a second extremity thereof, both the first extremity and the second extremity ending at the rotor surface.

In the first flux guide section FG1, flux barrier B2 has a bridge BR2 interrupting the flux barrier B2 while the rest of the flux barriers B1, B3 and B4 do not have any bridges. The flux barrier B2 is the second innermost of the four flux barriers in the radial direction.

In the second flux guide section FG2, flux barrier B1 has a bridge BR1 interrupting the flux barrier B1 while the rest of the flux barriers B2, B3 and B4 do not have any bridges. The flux barrier B1 is the innermost of the four flux barriers in the radial direction.

Both bridge BR1 and bridge BR2 are made of a material of high permeance. In an embodiment, the bridges are made of the same material as the flux paths.

Widths of bridges BR1 and BR2 are substantially the same. In an embodiment, each of the bridges has a width greater than or equal to 4 mm. Basically, the thinner the bridge the better. Therefore, it is typically the manufacturing process of the rotor sheet that defines the smallest feasible width for the bridges. Herein, a width of a bridge is perpendicular to both the axial direction of the rotor and the radial direction of the rotor.

Each of the bridges BR1 and BR2 is positioned such that a quadrature axis of the rotor traverses the bridge. In Figure 1, only a quadrature axis q_{A} traversing flux guide section FG1 is depicted, along with two direct pole axes d_{A} which form an angle that is bisected by the quadrature axis q_{A}. Each of the bridges BR1 and BR2 is symmetrical with relation to corresponding quadrature axis.

Except for the bridges, the first flux guide section FG1 and the second flux guide section FG2 are identical. The rotor sheet RS1 is symmetrical with relation to two lines, one of which coincides with a quadrature axis bisecting the first flux guide section FG1 and the other coincides with a quadrature axis bisecting the second flux guide section FG2.

Rotor sheet RS1 comprises more bridges close to the centre axis of the rotor sheet than further from the centre axis of the rotor sheet. The innermost flux barriers B1 have a total of two bridges. The second innermost flux barriers B2 also have a total of two bridges. The second outermost flux barriers B3 and the outermost flux barriers B4 do not have any bridges.

Rotor sheet RS1 comprise a peripheral bridge assembly. The peripheral bridge assembly comprises a plurality of peripheral bridges made of a material of high permeance. The peripheral bridges form, together with outer portions of flux paths, an unbroken ring made of a material of high permeance, the unbroken ring defining an outer circumference of the rotor sheet RS1. The unbroken ring strengthens the structure of the rotor sheet RS1. In an embodiment, the peripheral bridge assembly is made of the same material as the flux paths.

Rotor sheet RS1 has eight connection apertures. Each flux path P1 comprises a connection aperture CA1, and each flux path P2 comprises a connection aperture CA2. The connection apertures are adapted to receive bolts for pressing rotor sheets of a stack together. In an alternative embodiment, each of the rotor sheets comprises a plurality of connection apertures. In a further alternative embodiment, rotor sheets are attached to each other by gluing.

A rotor core comprises a plurality of rotor sheets stacked in an axial direction. In an embodiment, the plurality of rotor sheets comprises exclusively rotor sheets RS1 such that the plurality of rotor sheets RS1 are arranged in a plurality of rotor sheet groups, each rotor sheet group comprising at least one rotor sheet RS1. Rotor sheets of each group are located successively to each other in the axial direction.

In each rotor sheet group, the first flux guide sections FG1 are aligned with each other and the second flux guide sections FG2 are aligned with each other. In the rotor core, successive rotor sheet groups are offset by π/2 radians (90°) such that the first flux guide sections FG1 of a rotor sheet group are aligned with the second flux guide sections FG2 of adjacent rotor sheet group.

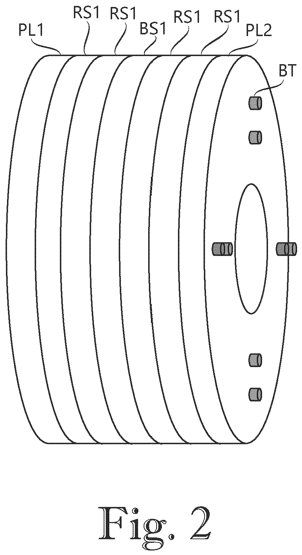

Figure 2 shows a rotor comprising four rotor sheets RS1, a barrier sheet BS1 and end plates PL1 and PL2. The four rotor sheets RS1 are arranged in two rotor sheet groups, each rotor sheet group comprising two rotor sheets RS1. The rotor sheets of each group are located successively to each other in the axial direction, wherein in each rotor sheet group, the first flux guide sections FG1 are aligned with each other, and wherein the first flux guide sections FG1 of a rotor sheet group are aligned with the second flux guide sections FG2 of the adjacent rotor sheet group.

Barrier sheet BS1 is located between the two rotor sheet groups. The diameter of the barrier sheet BS1 is substantially the same as the diameter of the rotor sheets RS1. Barrier sheet BS1 is made of a material of low permeance. In an embodiment, the barrier sheet is made of stainless steel.

In an embodiment, the thickness of the barrier sheet is less than the thickness of rotor sheets of the rotor core. In an alternative embodiment, the thickness of the barrier sheet is less than 1 mm.

End plate PL1 is located at a first end of the rotor, and end plate PL2 is located at a second end of the rotor. The two rotor sheet groups and the barrier sheet BS1 are pressed between the end plates PL1 and PL2 by bolts BT extending through the connection apertures CA1 and CA2.

In an embodiment, each rotor sheet is manufactured from ferromagnetic plate by a single punching process, wherein also the bridges of flux barriers are formed by the single punching process. In an embodiment in which the rotor comprises exclusively one type of rotor sheets, the rotor sheets are formed with one punching tool. Said rotor sheets of one type are automatically rotated for stacking.

The present invention is not limited to reluctance machines. For example, it is possible to use a rotor according to present invention in a permanent magnet machine. Basically, it is possible to use the present invention in any stacked rotor having bridges. Further, the present invention is usable for any number of poles.

It will be obvious to a person skilled in the art that the inventive concept can be implemented in various ways. The invention and its embodiments are not limited to the examples described above but may vary within the scope of the claims.

## Claims

1. A rotor for an electric machine comprising a rotor core having a plurality of rotor sheets (RS1) stacked in an axial direction, each of the plurality of rotor sheets (RS1) comprising a plurality of flux guide sections located along circumferential direction of the rotor sheet, each of the plurality of flux guide sections comprising a plurality of flux paths (P1, P2, P3, P4) made of a material of high permeance and a plurality of flux barriers (B1, B2, B3, B4) made of a material of low permeance located alternately along radial direction of the flux guide section, the plurality of flux guide sections comprising a first flux guide section (FG1) in which one of the plurality of flux barriers (B1, B2, B3, B4) has a bridge (BR1, BR2) interrupting the flux barrier (B1, B2, B3, B4) and another of the plurality of flux barriers (B1, B2, B3, B4) does not have a bridge (BR1, BR2) interrupting the flux barrier (B1, B2, B3, B4),
**characterized in that** the plurality of flux guide sections comprises a second flux guide section (FG2) in which said one of the plurality of flux barriers (B1, B2, B3, B4) does not have a bridge (BR1, BR2) interrupting the flux barrier (B1, B2, B3, B4) and said another of the plurality of flux barriers (B1, B2, B3, B4) has a bridge (BR1, BR2) interrupting the flux barrier (B1, B2, B3, B4), wherein each of the bridges is made of a material of high permeance.

2. The rotor according to claim 1, wherein the plurality of rotor sheets (RS1) are arranged in a plurality of rotor sheet groups, each rotor sheet group comprising at least one rotor sheet (RS1), wherein rotor sheets of each group are located successively to each other in the axial direction, wherein in each rotor sheet group, the first flux guide sections (FG1) are aligned with each other, and wherein the first flux guide sections (FG1) of a rotor sheet group are aligned with the second flux guide sections (FG2) of adjacent rotor sheet group.

3. The rotor according to claim 1 or 2, wherein each of the plurality of rotor sheets (RS1) is identical with the rest of the plurality of rotor sheets.

4. The rotor according to any one of the preceding claims, wherein each flux guide section (FG1, FG2) has an equal number of flux paths (P1, P2, P3, P4) and an equal number of flux barriers (B1, B2, B3, B4) compared to the other flux guide sections (FG1, FG2).

5. The rotor according to claim 4, wherein except for the bridges, the first flux guide section (FG1) and the second flux guide section (FG2) are identical.

6. The rotor according to any one of the preceding claims, wherein the plurality of flux guide sections of each of the plurality of rotor sheets (RS1) comprises exclusively first flux guide sections (FG1) and second flux guide sections (FG2).

7. The rotor according to any one of the preceding claims, wherein widths of bridges in the first flux guide section (FG1) and in the second flux guide section (FG2) are substantially the same.

8. The rotor according to any one of the preceding claims, wherein each of the bridges (BR1, BR2) is positioned such that a quadrature axis (q_{A}) of the rotor traverses the bridge (BR1, BR2).

9. The rotor according to any one of the preceding claims, wherein said one of the plurality of flux barriers (B1, B2, B3, B4) is the innermost of the plurality of flux barriers (B1, B2, B3, B4) in the radial direction and said another of the plurality of flux barriers (B1, B2, B3, B4) is the second innermost of the plurality of flux barriers (B1, B2, B3, B4) in the radial direction.

10. The rotor according to claim 2, wherein the rotor core comprises at least one barrier sheet (BS1) located between adjacent rotor sheet groups, wherein the at least one barrier sheet (BS1) is made of a material of low permeance.

11. The rotor according to claim 10, wherein the at least one barrier sheet (BS1) is made of stainless steel.

12. The rotor according to any one of the preceding claims, wherein the rotor further comprises a first end plate (PL1) and a second end plate (PL2) spaced apart in a longitudinal direction parallel to the axis of rotation of the rotor, wherein the plurality of rotor sheets (RS1) is stacked between the first end plate (PL1) and a second end plate (PL2).

13. The rotor according to any one of the preceding claims, wherein the rotor is a rotor for a reluctance machine.

14. An electric machine comprising a rotor and a stator, wherein the rotor of the electric machine is a rotor according to any one of claims 1 - 13.

15. A method for manufacturing an electric machine according to claim 14, wherein the method comprises a step of providing the plurality of rotor sheets, the step comprising a punching process.
